(19) Europäisches Patentamt / European Patent Office / Office européen des brevets

(11) **EP 4 440 071 A1**

(12) **EUROPEAN PATENT APPLICATION**

(43) Date of publication:
**02.10.2024 Bulletin 2024/40**

(51) International Patent Classification (IPC):
$H04L\ 45/302$ (2022.01)  $G06N\ 5/01$ (2023.01)
$H04L\ 41/12$ (2022.01)  $H04L\ 45/00$ (2022.01)
$H04L\ 45/42$ (2022.01)  $H04L\ 47/28$ (2022.01)
$H04L\ 47/56$ (2022.01)

(21) Application number: **23305434.5**

(22) Date of filing: **29.03.2023**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **Mitsubishi Electric R&D Centre Europe B.V.**
**1119 NS Schiphol Rijk Amsterdam (NL)**
Designated Contracting States:
**FR**
• **MITSUBISHI ELECTRIC CORPORATION**
**Chiyoda-ku**
**Tokyo 100-8310 (JP)**
Designated Contracting States:
**AL AT BE BG CH CY CZ DE DK EE ES FI GB GR HR HU IE IS IT LI LT LU LV MC ME MK MT NL NO PL PT RO RS SE SI SK SM TR**

(72) Inventors:
• **COUSINEAU, Denis**
**35708 Rennes Cédex 7 (FR)**
• **BOYER, Benoit**
**35708 Rennes Cédex 7 (FR)**

(74) Representative: **Plasseraud IP**
**104 Rue de Richelieu**
**CS92104**
**75080 Paris Cedex 02 (FR)**

(54) **TIME SENSITIVE NETWORK SCHEDULING USING STREAM TRANFORMATIONS**

(57) The invention relates to a computer-implemented method comprising: obtaining: a topology of a deterministic Ethernet network; and a set of critical streams to instantiate in the network, each critical stream being defined by at least a path, a period, a maximum allowed end-to-end latency, a set of packets, each packet being associated to a size ; estimating a plurality of numbers of constraints implied respectively by a plurality of sets of stream transformations of said set of critical streams, each stream transformation modifying a stream while preserving or increasing a bitrate between a sender and one or more receiver nodes of the stream ; selecting a set of stream transformations based on said plurality of numbers of constraints ; applying said selected set of stream transformations to obtain a transformed set of critical streams ; generating, from said transformed set of critical streams, an Automated Theorem Proving "ATP" problem comprising formulas that express the constraints that must be complied with by the transmissions of the packets of the streams, and variables defining the configuration of the network ; executing an ATP prover to solve the ATP problem and obtain values of said variables defining the configuration of the network that satisfies the set of formulas ; if the execution of the ATP prover is successful, configuring the network according to said obtained values defining the configuration of the network.

| | |
|---|---|
| S1 | Obt top, strms |
| S2 | Est Nb Contr |
| S3 | Select set transf |
| S4 | Apply Trans |
| S5 | Gen form |
| S6 | Exec Solv |
| S7 | Succ? |
| | Yes |
| S8 | Config Net |

P2

**FIG. 2**

EP 4 440 071 A1

**Description**

**Technical Field**

This disclosure pertains to the field of time sensitive networks. More specifically, it pertains to the field of solving time sensitive network scheduling problems.

**Background Art**

Ethernet networks provide a solution for performing communications between components of a system. For example, Ethernet networks can be deployed in systems such as cars, planes, medical devices etc. to provide a support for the emission and reception of messages between the components of the system. For example, in a car, a central computer may receive messages from various sensors, and send messages to actuators (e.g brakes, motor...) through an Ethernet network to control the vehicle.

When such a system is a critical system, real-time communications are needed. For instance, in Automotive, the in-car network must use real-time communications, because it must deliver messages to Electronic Power Units (EPUs) in charge of controlling brakes or regulating the speed. Usual Ethernet networks cannot be used for such a purpose because they do not have real-time communication feature. Even if Ethernet offers reasonable mechanisms to ensure fairness between communication streams, such as Quality of Service (QoS) that introduces message priorities that allow to favour critical messages, standard Ethernet networks does not provide any guarantee regarding the strong deadlines. Therefore, some critical messages might not reach their destination before the expected deadline in a standard Ethernet network. This situation is not acceptable in critical systems.

Time Sensitive Networks (TSNs) have been designed to provide Ethernet with real-time mechanisms. The standard TSN allows to force the switches to send packets from a given class at a given time. Switches are setup using a Gate Control List (GCL) for each port, defining the moments packets of a given class are sent. One general objective of the TSNs is therefore to calculate the GCL such that the end-to-end delay of critical streams are respected. This calculation can be done statically.

In substance, such calculation of the setup of the TSN must be done for all the gates at all times. As streams might not share the same period, it is necessary to find a full scheduling for all the streams statically to consider the hyper-period, *i.e.,* the least common multiple (lcm) of the periods. Indeed, the scheduling problem must be solved for any interleaving of the streams' periods. Upon the resolution of a TSN scheduling problem, we obtain a variable for each tuple of a stream, a switch in the path of the stream, a packet to be sent during the stream's period and a period occurrence during the hyper-period. Real-world industrial use cases generally lead to a very large number of variables and a very large number of associated constraints, potentially preventing from solving the scheduling problem.

Craciunas, S. S., Oliver, R. S., & Ag, T. (2017). An overview of scheduling mechanisms for time-sensitive networks. Proceedings of the Real-time summer school LÉcole dÉté Temps Réel (ETR), 1551-3203. proposed a logical formalization of the TSN scheduling problem, in which the problem variables are the time stamps corresponding to the emission, by a switch, of a given packet from a given stream (also called gates). The constraints are explained using mathematical of logical formulas wherein the variables are opening and closing times of the gates of the switches of the network, and the problem is solved using SMT (Satisfiability Modulo Theories). The formalization expresses the problem as constraints in the SMT-lib language. These constraints can then be sent to some SMT-solver (e.g., Z3, Alt-Ergo, CVC4...) that might find a solution.

The approach proposed by Craciunas provides a practical tool for solving TSN scheduling problems. The main issue of the approach is scalability. In practice, real world industrial use cases are unsolvable, despite the efficiency of SMT-solvers. Typically, such use cases formalizations contain too many variables and constraints (*e.g.,* $10^{10}$ constraints and $10^5$ gates), and cannot be handled, as *such,* by this technology. Therefore the approach by Crasiunas cannot be used in practice to perform TSN scheduling in real-world complex critical systems

There is therefore the need for a method allowing to perform a scheduling of Time Sensitive Networks that comply with hard real-time constraints for networks in large critical systems.

**Summary**

This disclosure improves the situation.

It is proposed a computer-implemented method comprising: obtaining: a topology of a deterministic Ethernet network; and a set of critical streams to instantiate in the network, each critical stream being defined by at least a path, a period, a maximum allowed end-to-end latency, a set of packets, each packet being associated to a size ; estimating a plurality of numbers of constraints implied respectively by a plurality of sets of stream transformations of said set of critical streams, each stream transformation modifying a stream while preserving or increasing a bitrate between a sender and one or more receiver nodes of the stream ; selecting a set of stream transformations based on said plurality of numbers of constraints ; applying said selected set of stream transformations to obtain a transformed set of critical streams ; generating, from said transformed set of critical streams, an Automated Theorem Proving "ATP" problem comprising formulas that express the constraints that must be complied with by the transmissions of the packets of the streams, and variables defining the configuration of the network ; executing an ATP prover to solve the ATP problem and obtain values of said variables defining the configuration of the network that satisfies the set of formulas ; if the execution of the ATP prover is successful, configuring the network according to said obtained values defining the configuration of the network.

By "topology of an Ethernet network", we designate a set of attributes that define the network, which comprise the node (switches and end nodes), links, and a flow rate of each link.

By "deterministic Ethernet network", we designate an Ethernet network which is able to implement real-time behavior for at least a part of the communication in the network. Examples of deterministic Ethernet networks comprise networks that complies with the TTEthernet or Time-Sensitive Network (TSN) frameworks. Deterministic Ethernet networks may notably be obtained by implementing the fault tolerant clock synchronization mechanism under the standard IEEE 802.1ASrev defined in Institute of Electrical and Electronics Engineers, Inc, "Time-Sensitive Networking Task Group," http://www.ieee802.org/1/pages/tsn.html, 2016, retrieved 06-Jul-2016, and/or the network-wide reference and mechanisms defining end-to-end timing of communication streams under the standard IEEE 802.1Qbv defined in Institute of Electrical and Electronics Engineers, Inc, "802.1Qbv-Enhancements for Scheduled Traffic," http://www.ieee802.org/1/pages/802.1bv.html, 2016, draft 3.1.

By "stream", we designate a periodic data transmission from a sender node (also called talker) to one or more receiver nodes (also called listeners).

By "critical stream", we designate a stream for which a end-to-end latency must be complied with at each period.

By "path of a stream", or "route of a stream" we designate a series of nodes of the network through which the stream flows.

By "constraint", we designate a real-time constraint which applies to the streams. Such constraints may be for example:

- frame constraints. Such constraints typically comprise constraints relative to emissions of packets in a time frame, for example the order of emission of the packets by a stream;
- link constraints. Such constraints typically contain constraints relative to the size and data rate of the links;
- stream transmission constraints. Such kinds of constraints may for example comprise constraints representative of the transmission and reception of packets. For example, that a packet must be received at a switch from a first link before being transmitted on a second link; that two packets cannot be sent in the same time on the same link, etc.;
- end-to-end constraints: such constraint may for example represent the maximum delay between the emission of a packet and its reception.

By "estimating a number of constraints implied by a set of rate-equivalent stream transformation", we designate a calculation of the number of constraints which are formulated by the streams as transformed to comply with the time requirements of each critical streams.

By "a set of stream transformations", we designate a set of one or more stream transformation which apply to one or more critical streams of the set of critical streams. The set of stream transformations can comprise different numbers of transformations, from a single transformation of a single stream, to transformations of each of the streams.

By "stream transformations", or "rate-equivalent stream transformations", we designate a transformation of one or more of the features of the stream, for example a transformation of one or more of the path, the period, the maximum allowed end-to-end latency, the set of packets or the size of the packets, while preserving or increasing a bitrate between a sender and one or more receiver nodes of the stream.

By "sender", we designate a node that emits the packets of a stream.

By "receiver", we designate a node that receive packets of a stream.

Stated otherwise, a stream transformation modifies the features of the stream without modifying the sender and the one or more receivers of the stream, and the modified stream has a flow rate at least equal to the bitrate of the initial stream. Therefore, the stream transformations ensure that at least the same data rate can be transmitted between the sender and the one or more receivers of the stream. Thus, a stream transformation does not change the characteristics of the data that are transferred through a stream: each receiver will receive the same amount of data at the same rate and complying with the same end-to-end delay, even if the periods and packets to define the stream are modified.

Therefore, such rate-equivalent stream transformations can be tested without affecting the behavior of the network.

By "Automated Theorem Proving (ATP) problem", we designate a problem of automated reasoning and mathematical logic that comprises a plurality of equations depending upon the values of variables. The proof of the ATP problem designates the identification of a solution, i.e a set of values of the variables, that satisfies all the mathematical or logical formulas. The ATP problem may for example be a " Satisfiability modulo theories (SMT) instance" , which is an expression in a SMT language of formulas and variables that can be fed to a SMT solver. The invention is not restricted to a specific ATP or SMT language, and could use for example the SMT-lib language or the CVC language.

By "formula", we designate first-order logic or mathematical formulas that belongs to mathematical fields such as the theories of linear integer arithmetic, linear real arithmetic, etc. For example, (x>2 and x<1) or (2+x=2-x) are mathematical formulas that are satisfied with the instantiation x=0.

By "generating a set of mathematical formulas that express the constraints that must be complied with by the network", we designate defining mathematical formulas that are equivalent to the constraints implied by the transformed set of critical streams to comply with the real-time requirements of the streams. Each mathematical formula may for example be an equation or an inequation and represent a constraint caused by two packets of two different streams. The generation of mathematical formulas from a set of streams is for example described by "Craciunas, S.S., & Oliver, R.S. (2017). An Overview of Scheduling Mechanisms for Time-sensitive Networks. ".

By "variable defining the configuration of the network", we designate variables defining the behavior of the switches of the network, for example the status of the gates of the switches at each time of the hyperperiod of the set of streams.

By "ATP prover", we designate a computer-implemented tool which is configured to prove an ATP problem, that is to say to demonstrate if a solution (e.g a set of values of the variables that satisfy all the constraints) can be brought or not to the ATP problem. In cases wherein the ATP problem is a SMT instance, the ATP prover may be a SMT solver such as Z3, CVC4, Alt-Ergo, VeriT, or another ATP prover such as Vampire or iProver.

By "solving the ATP problem", we designate identifying values of variables that satisfy all the mathematical formulas. By "a configuration of the network", we designate a set of rules to be followed by the switches of the network. For example, if the network complies with the TSN framework, the set of rules may be the times at which each gate of each switch is open or close.

By "a configuration of the network", we designate a set of rules to be followed by the switches of the network. For example, if the network complies with the TSN framework, the set of rules may be the times at which each gate of each switch is open or close.

By "configuring the network", we designate setting the values of variables defining the configuration, for example to configure the switches of the network. According to different embodiments of the invention, this may be performed for example by one or more of:

- configuring a pre-existing network, for example by setting the values of variables that govern the behavior of the switches that govern the behavior of the network. This may comprise setting the GCL values for each switch to define the times at which the gates are open or closed ;

- modifying the topology of the network. This may comprise for example: modifying the speed of the links, and/or modifying the architecture of the network;

- manufacturing the network according to its topology, and configuring the manufactured network.

Estimating the number of constraints implied by a transformed set of streams requires a much more limited computing power than actually generating the constraints.

Therefore, a set of transformations can be selected among a large number of possible transformations, depending to the associated number of constraints, in order to reduce the number of constraints that are implied by the transformed set of streams compared to the initial set of streams. Thus, the constraints can be generated, and the ATP prover can be run on a number of constraints which is as limited as possible.

As the estimation of the number of constraints requires an amount of computing resources significantly lower than the actual generation of the constraints, and execution of the ATP prover, the time and resources required to identify a suitable configuration of the network can be drastically reduced.

Furthermore, as noted above, in many real cases, the execution of the ATP prover is simply not possible without a reduction of the number of constraints, because the computing resources needed to execute the ATP prover far exceeds the computing resources available in conventional computing means.

By allowing a substantial reduction of the number of constraints at a limited computing cost, the invention therefore allows executing an ATP prover on complex networks for which a solution was previously not computable.

Therefore, if it exists, a configuration of the network which ensures that the time constraints of the critical streams are met can be identified in a reasonable time that using conventional computing means.

In another aspect, it is proposed a computer software comprising instructions to implement at least a part of a method as defined here when the software is executed by a processor.

In another aspect, it is proposed a computer-readable non-transient recording medium on which a software is registered to implement the method as defined here when the software is executed by a processor.

The following features, can be optionally implemented, separately or in combination one with the others:

Advantageously, said step of selecting the set of transformations comprises selecting the set of transformations that is associated with the lowest number of constraints among said plurality of numbers of constraints.

This allows selecting the set of transformations which has the highest likelihood of leading to a solvable solution, and for which the execution of the SMT solver will require a lowest amount of resources.

Advantageously, the computer-implemented method comprises, if the execution of the ATP prover is not successful, selecting another set of transformation belonging to said plurality of sets of stream transformations, and going back to said step of applying said selected set of transformations

This allows selecting further sets of transformations, until a set of transformation allows a successful solving by the ATP prover.

Advantageously, said set of transformations comprises a plurality of transformations of a plurality of streams.

Simultaneously performing a plurality of transformations on a plurality of different streams increases the likelihood of significantly reducing the number of constraints.

Advantageously, said set of transformations comprises a plurality of instances of a same transformation applied respectively to a plurality of streams that share at least one common feature.

By "a plurality of streams that share at least one common feature", we designate a plurality of streams that have identical features, or identical values of parameters. For example, this may be:

- streams that have the same period; and/or

- streams that have the same number of packets; and/or

- streams that have the same priority;

Etc.

Applying the same transformation to streams that share common features leads to a reduced number of constraints.

Advantageously, said set of transformations comprises a plurality of instances of a same period change applied respectively to a plurality of streams having the same period.

When a same transformation that changes the period of the streams, is applied to streams that have the same period, the transformed streams will also have the same modified period. Therefore, the constraints between these streams need to be evaluated only on a single modified period, and not on different partially overlapping periods. This reduces the number of partially overlapping periods where to verify constraints, and the hyperperiod of the network, and therefore reduces the number of constraints to verify.

Advantageously, said set of transformations comprises at least one division of a period of a stream into a plurality of smaller periods, associated to a separation of the packets to send among the plurality of the smaller periods.

This reduces the number of packets in each of the smaller periods with a smaller number of packets. This may further reduce the hyperperiod of the plurality of transformed stream compared to the initial plurality of streams, which greatly reduces the number of constraints to comply with.

Advantageously, said division is selected so as to divide the period of a stream into a smaller period that is equal to or a multiple of the greatest common divider of the periods of the set of streams, and not increase to the hyperperiod of the set of streams.

By "hyperperiod", we designate the lowest duration in which identical patterns of stream periods can be repeated. In practice, the hyperperiod is computed as the lowest common multiple (LCM) of all the periods of the streams.

This allow selecting period division that do not increase the hyperperiod of the set of streams, and therefore does not increase the number of constraints to comply with.

Advantageously, said set of transformations comprises at least one change of a period of a stream to reduce the hyperperiod of the set of streams.

Reducing the hyperperiod of the transformed set of streams compared to the initial et of streams greatly reduces the number of constraints to comply with, because the constraints are evaluated over a smaller hyperperiod. This may sometimes be achieved through a minimal change of the period of one or few streams.

Advantageously, the computer-implemented method comprises: displaying a proposal of a change of a period of a stream ; receiving an input relative to an acceptance or a refusal of the change ; adding said change to said et of transformations if the input is relative to the acceptance of the change.

The alignment of the period of a stream to the period of another stream may greatly reduce the hyperperiod, of the set of stream, but may also affect the functionality of the network. This therefore ensures that the change is validated by a user, for example an expert user or a designer of the network.

Advantageously, said change consists in making a period of a stream that has the lowest greatest common divider with periods of other streams of the set of streams equal to the period of at least one other stream of the set of streams.

Modifying the period of the stream that has the lowest greatest common divider with periods of the other streams of the set to be equal to the period of another stream greatly reduces the hyperperiod of the set of streams, and thus the number of constraints.

Advantageously, said set of transformations comprises at least one split of at least one packet of a stream into a plurality of smaller packets.

Splitting a packet into smaller packets provides more flexibility for routing the packets, and in particular allows interleaving the smaller packets with packets from other streams. This is especially relevant for large packets, that may be difficult to interleave.

Advantageously, said split of is further associated with a division of the period of said stream.

Dividing the period of the stream further reduces the hyperperiod of the set of streams.

Advantageously, said set of transformations comprises at least one grouping of a plurality of packets of a stream into a single packet.

This reduces the number of packets, and thus the number of constraints to take into account. This is especially relevant for grouping small packets, so that the number of constraints is reduced but the single packet is not too big and does not cause interleaving issues.

**Brief Description of Drawings**

Other features, details and advantages will be shown in the following detailed description and on the figures, on which:

**Fig. 1**

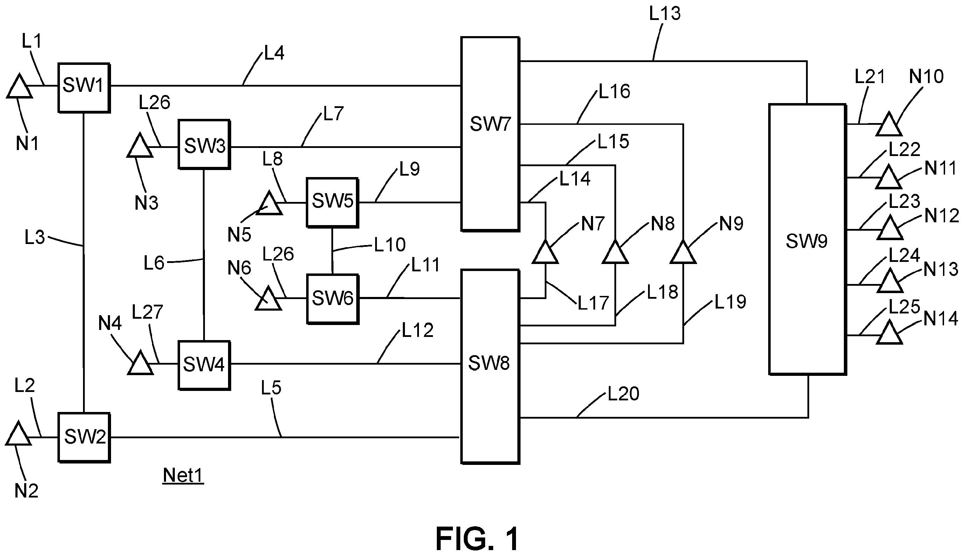

[Fig. 1] is a first example of a Time Sensitive Network for the scheduling of which the invention can be implemented according to an embodiment.

**Fig. 2**

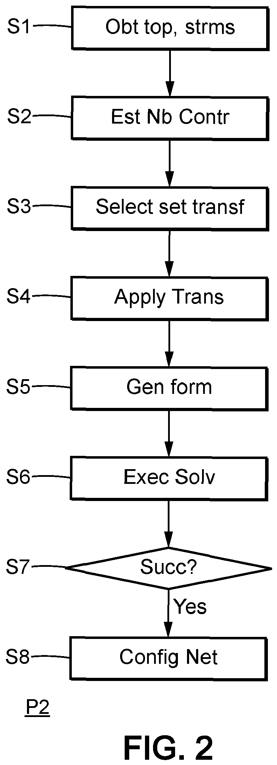

[Fig. 2] is a first example of a method according to an embodiment.

**Fig. 3**

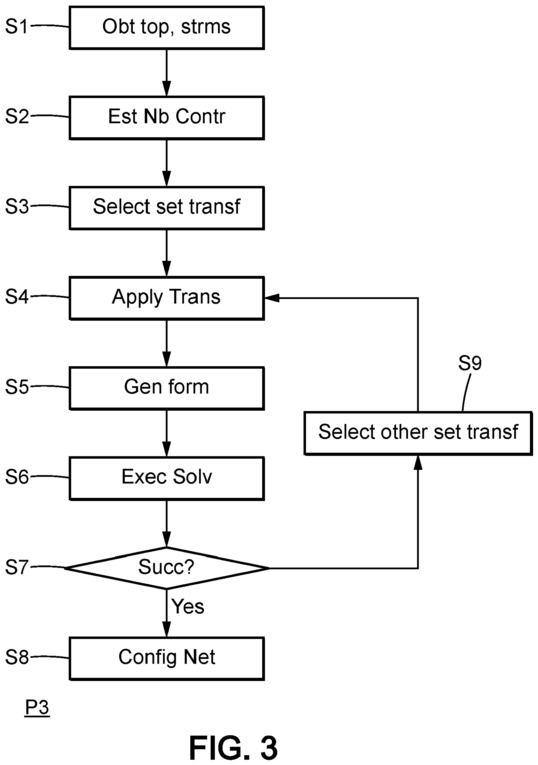

[Fig. 3] is a second example of a method according to an embodiment.

**Fig. 4**

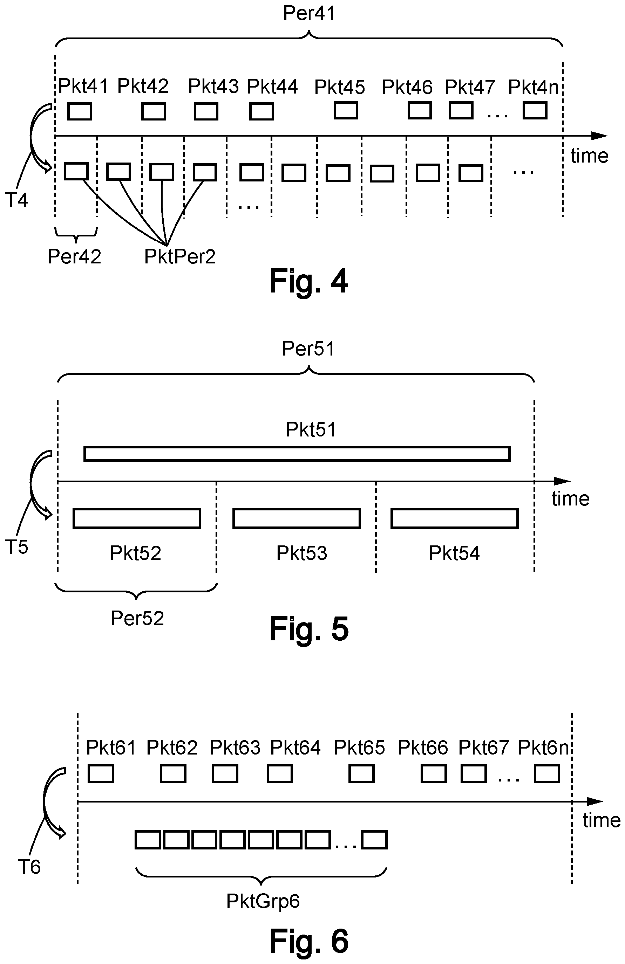

[Fig. 4] is a first example of stream transformation according to an embodiment.

**Fig. 5**
[Fig. 5] is a second example of stream transformation according to an embodiment.

**Fig. 6**
[Fig. 6] is a third example of stream transformation according to an embodiment.

**Description of Embodiments**

It is now referred to figure 1.

Figure 1 represents a first example of a Time Sensitive Network for the scheduling of which the invention can be implemented according to an embodiment.

The network Net 1 comprises:

- 14 end nodes N1, N2, N3, N4, N5, N6, N7, N8, N9, N10, N11, N12, N13, N14 ;

- 9 switch nodes, or "switches" SW1, SW2, SW3, SW4, SW5, SW6, SW7, SW8, SW9 ;

- 27 links L1, L2, L3, L4, L5, L6, L7, L8, L9, L10, L11, L12, L13, L14, L15, L16, L17, L18, L19, L20, L21, L22, L23, L24, L25, L26, L27.

Each link allows a direct transmission of packets between two nodes. For example:

- Some links may allow a direct transmission of packets between an end node and a switch. For example, the link L2 allows a direct transmission of packets between the end node N2 and the switch SW2 ;

- Some links may allow a direct transmission of packets between two switches. For example, the link L3 allows a direct transmission of packets between the switch SW3 and the switch SW2.

Each end node may represent an element of a system. For example, if the network Net1 is implemented in a terrestrial vehicle, the end nodes may represent calculators, sensors, actuators, etc. The packets therefore represent the messages that are exchanged between these elements.

The list of nodes, switches and links, as well as the flow rate of each link, define the topology of the network.

The network Net1 is configured to let the streams flow between nodes. Each stream represents a communication between at lea two end nodes.

The switches are statically configured to let packets of certain streams pass or not through "gates" that may be open or closed to let packets pass or not. The configuration of a switch can be performed through a "Gate Control List" (GCL) which defines the gates of the switch, and the times at which each gate is open or closed in the hyperperiod of the network.

A stream can be defined between a first end node, called "the sender" (or "the talker"), to one or more end nodes, called "the receivers" (or "the listeners"), and is defined at least by:

- a path, which defines the list of links and nodes followed by the stream from the sender to the one or more receivers. Different paths may be defined between a sender and a receiver. For example, if a stream is defined from the sender N3 to the receiver N8, may for example follow the path N3, L26, SW3, L7, SW7, L15, N8, or the path N3, L26, SW3, L6, SW4, L12, SW8, L18, N8 ;

- a period, which defines the period upon which the transmission of the packets must be repeated ;

- a maximum allowed end-to-end latency, which defines the maximum allowed time between the emission and reception of the packets ;

- a set of packets to send, each packet being defined by a size.

Therefore, the streams define a periodic transmission of packets, wherein a sender node periodically sends to one or more receiver nodes packets of a defined size, that must be transmitted on or before the end-to-end latency. This formalism defines the interaction that occur between the components of the system. For example, a stream may represent the measurements that are sent by a sensor to a central controller during a period, and the maximum allowed latency for the central controller to receive sensor measurement, the instructions that are sent by a central controller to an actuator during a period, and the maximum allowed latency for the actuator to receive the instructions from the central controller, etc.

Therefore, the configuration of the switches must allow each stream to comply with its maximum allowed latency for each period, so that the real time requirements of each stream is complied with. The determination of a configuration of the network that fulfils these needs is called a "TSN scheduling problem".

It is now referred to figure 2.

Figure 2 represents a first example of a method according to an embodiment.

The method P2 is a computer-implemented method, that comprises a first step S1 of obtaining a topology of a deterministic Ethernet network, and a set of critical streams to instantiate in the network, each critical stream being defined by at least a path, a period, a maximum allowed end-to-end latency, a set of packets, each packet being associated to a size.

At the output of the first step S1, the topology of the network and the streams to instantiate are therefore known.

The method P1 further comprises a second step S2 of estimating a plurality of numbers of constraints implied respectively by a plurality of sets of stream transformations of said set of critical streams, each stream transformation modifying a stream while preserving or increasing a bitrate between a sender and one or more receiver nodes of the stream.

As noted above, upon a transformation each receiver will receive the same amount of data at the same rate and complying with the same end-to-end delay, even if the periods and packets to define the stream is modified, and the stream transformations does not affect the behavior of the network. Thus, any time constraints implied by an initial stream should be complied by a transformed stream.

Stated otherwise, the step S2 consists in considering a plurality of different set of stream transformations, and estimating a number of constraints implied respectfully by each set of stream transformations.

The stream transformations can be obtained in different ways. For example, all the possible transformations can be considered. The possible transformations can also be filtered. For example, a transformation that is expected to increase the number of constraints, such as for example a transformation that would cause the hyperperiod of the set of streams to increase, can be removed from the set of stream transformations.

According to a number of embodiments of the invention, a set of transformations may comprise a single transformation of a single stream, or a plurality of transformations of a plurality of streams.

When a set of transformations comprises a plurality of transformations of a plurality of streams, the set of transformations may comprise a plurality of instances of a same transformation applied respectively to a plurality of streams that share at least one common feature.

For example, a same transformation can be applied to streams that have the same period, number of packets, the same priority, etc.

For example the same transformation may be applied to streams in a group of streams that has the same period and number of packets.

This allows increasing the number of streams that have the same features when the set of transformations is applied, and thus reducing the number of constraints.

In particular, the application of a same period change to streams that already have same period allows preserving the same period of the transformed stream, and therefore reduce the number of partially overlapping periods where to compute constraints.

According to various embodiments of the invention, all the paths of the streams can be preserved, or, conversely, the path of at least one stream may be modified. The modification of the path of a stream however does not modify the sender and receivers of a stream. For example, if an initial stream flows from node N3 to node N8 through nodes SW3 and SW7, a modification of the path of the stream may consist in modifying the stream to flow from node N3 to node N8 through nodes SW3, SW4 and SW8.

Then, the step S2 comprises a sub-step of estimating a number of constraints implied respectfully by each set of stream transformations. Stated otherwise, this means that the number of constraints implied by the set of critical streams is estimated upon the application of each set of transformations belonging to the plurality of sets of stream transformations.

The estimation of the number of constraints upon the execution of a set of stream transformations can be done in a fast and straightforward manner.

For example, the number of constraints can be incremented for each pair of streams that share a link. The number of packets of each stream can also be taken into account. For example, if two streams that share a same link respectively have a number m and n of packets, a number of constraints equal to m * n can be added. The relative periods of the streams that share a same link can also be taken into account. For example, constraints between packets can be calculated for each pair of overlapping periods of the streams. Thus, m * n constraints are added for each link that is shared by the two streams, and for each overlapping period of the streams.

Constraints can be generated also for each stream independently of the other stream, to express the fact that the packets of the stream need to follow the path of the stream. For example, a number of constraints equal to the number of periods * the number of constraints * the number of links in the path can be counted for each stream, in addition to the constraints caused by links shared by a plurality of streams.

Thus, it is apparent that the step S2 allows determining the number if constraints between each pair of packets of two different streams that need to be taken into account for ensuring that all time constraints of the network will be fulfilled.

The method P2 further comprises a step of S3 of selecting a set of stream transformations based on said plurality of numbers of constraints.

The step S3 thus consists in selecting a set of stream transformations based on the pluralities of numbers of constraints associated respectively with the plurality of sets of stream transformations.

In general, the selection may aim at minimizing the number of constraints after the application of the stream transformations, in order to improve the likelihood of solving the constraints, and reducing the amount of resource needed to find a solve the constraints.

The selection may for example be performed in different ways:

- any set of transformation that implies a number of constraints lower than those implied by the input set of streams may be selected ;

- a set of transformation may be randomly selected in a subset of transformations that imply the lowest numbers of constraints, for example:

○ among the sets of transformations that imply a number of constraints below a threshold, for example a predefined fraction of the number of constraints implied by the input set of streams. For example, the set of constraints may be selected among those that imply 10%, 1%, or 0,1% of the constraints implied by the input set of streams ;

○ among a predefined fraction of the sets of transformations that imply the lowest numbers of constraints, for example among the 10%, 1% or 0,1% sets of transformations that imply the lowest numbers of constraints.

- the set of transformations that imply the lowest numbers of constraints can be selected;

- the set of transformations that imply a high number of disjunctions of the constraints (i.e, alternative "or" constraints) may be discarded because such disjunctions require choices to be performed by the prover, and, when the choices do not lead to solving the problem, other choices need to be performed, which increases the number of cases to consider.

The method P2 further comprises a fourth step S4 of applying said selected set of stream transformations to obtain a transformed set of critical streams.

The step S4 consists in applying the set of stream transformations that has been selected at step S3, in order to obtain a set of transformed streams.

The method P2 further comprises a fifth step S5 of generating, from said transformed set of critical streams, an ATP problem comprising formulas that express the constraints that must be complied with by the transmissions of the packets of the streams, and variables defining the configuration of the network.

Stated otherwise, the step S5 consists in formulating an ATP problem wherein the variables are the configuration of the network, notably the GCL of the switches, and the formulas to solve defined the constraints, implied by the different streams and packets. The formulation of such a problem is for example described by "Craciunas, S.S., & Oliver, R.S. (2017). An Overview of Scheduling Mechanisms for Time-sensitive Networks." in the example of a SMT problem which is a specific type of ATP problem.

Few concrete illustrative examples of formulation of constraints are provided below.

In a first example:

- S1 and S2 are two streams whose paths pass through an L3 link,
- L1 is the predecessor of L3 in the path of S1,
- L2 is the predecessor of L3 in the path of S2,
- Pe1 and Pe2 are indices of periods of respectively S1 and S2, in the hyper-period, such that the corresponding periods of S1 and S2 overlap,
- Pa1 and Pa2 are packet indices of S1 and S2 respectively,

Then the constraints on the queue of the switch from which the link L3 arises can be formulated as:

$$((\varPhi S1,L1,Pa1,Pe1 + TL1,S1 < \varPhi S2,L2,Pa2,Pe2 + TL2,S2) \; AND \; (\varPhi S1,L3,Pa1,Pe1 < \varPhi S2,L3,Pa2,Pe2 \; ))$$

*OR*

$$((\varPhi S2,L2,Pa2,Pe2 + TL2,S2 < \varPhi S1,L1,Pa1,Pe1 + TL1,S1) \; AND \; (\varPhi S2,L3,Pa2,Pe2 < \varPhi S1,L3,Pa1,Pe1 \; ))$$

where:

- $\varPhi$S,L,Pa,Pe is the variable representing the gate corresponding to the passage of the packet Pa of the stream S on the link L during the period Pe;
- TL,S is the packet transmission time of the size associated with stream S on link L.

This constraint means in practice the following rule: "*Either the packet from S1 arrives before the packet from S2, and it leaves before, or the reverse*". Such kind of a constraints can be formulated in practice for each pair of streams that share a link in each overlapping periods, to ensure that the packets are sent successfully.

In a second example, using the same notations:

- S is a stream, L1 and L2 two consecutive links on the path of S,

Then, for each packet index Pa and each period index Pe:

$$\Phi S,L1,Pa,Pe + TL1,S < \Phi S,L2,Pa,Pe$$

This constraint can be means in practice the following rule: *"The packet must have arrived before leaving on the L2 link'.*

In a third example, an end-to-end constraint (i.e, a constraint regarding the end-to-end delay of a stream can be formulated as:

$$\Phi S,L2,Pa,Pe + TL2,S - \Phi S,L1,Pa,Pe < E2E\_delay(S)$$

Where L1 and L2 are the first and last links of the path of the stream S and E2E_delay(S) is the end-to-end delay of S.

The examples of formulations of constraints presented above are provided by means of non-limitative example only, and in practice the skilled man can envision all the constraints that can be formulated in a specific case. Rules of automatic generation of constraints can thus be applied to each stream, and to each pair of streams whose paths share at least one link or switch, for each partially overlapping period. The constraints can be generated in the languages of the ATP prover, or the SMT solver, that will be used.

This step S5 allows formalizing the problem of the scheduling of the network as a mathematical problem.

Indeed, if a solution of the problem can be found, the values of the variables define a configuration of the network which ensures that all constraints are met, that is to say a configuration of the network wherein all time requirements of all the critical streams are complied with.

On the other hand, if no solution can be found to the problem, no configuration of the network can be identified which allows complying with all the constraints.

The method P2 further comprises a sixth step S6 of executing an ATP prover to solve the ATP problem and obtain values of said variables defining the configuration of the network that satisfies the set of formulas.

At the seventh step S7, the method P2 verifies if the execution of the ATP prover is successful. A successful execution means that the ATP prover has been able to identify values of the variables that allow satisfying all the formulas, and therefore that a configuration of the network according to the values of variables allows ensuring that all the time constraints of the streams will be met.

On the other hand, an unsuccessful execution of the ATP prover means that no solution can be identified to the problem, and therefore that no configuration of the network allows ensuring that all the time constraints of the streams will be complied with.

The method P2 further comprises, if the execution of the ATP prover is successful, an eight step S8 of configuring the network according to said obtained values defining the configuration of the network.

The step S8 can for example comprise a configuration of the GCL for each switch according to the values identified by the ATP prover, so that the gates of each switch open or close at times that ensure that time constraints of each stream are met.

If the network already exists, it can be configured. In case the network does not already exist, it can be manufactured and configured.

In the method P2, the execution of the ATP prover at step S6 is therefore performed on a number of constraints which is highly reduced compared to the number of constraints implied by the initial set of streams. Therefore, the execution of the ATP prover requires a much lower amount of resources than if it were performed on the initial set of streams. In many complex cases, the execution of the ATP prover is simply possible, while it would not be based on the too large number of constraints implied by the initial set of streams.

As the estimation of the number of constraints is drastically less complex than the actual execution of the ATP prover, the obtention of the configuration is much less complex than if it was performed on the initial set of streams, and is simply possible in the most complex cases.

It is now referred to figure 4.

The method P4 is a second example of a method according to an embodiment.

The method P4 comprises all the steps of the method P2. In addition, the method P4 comprises, if the execution of the ATP prover is not successful, a step S9 of selecting another set of transformations belonging to said plurality of sets of stream transformations, and going back to said step (S4) of applying said selected set of transformations.

Stated otherwise, new sets of transformations are iteratively selected and applied, until a suitable solution is found.

The selection at step S9 can be performed in different ways. For example, the same rule of selection than in step S3 can be applied, on a reduced list of set of transformations, from which each set of transformations is removed when it is tested. At each iteration, the number of sets of transformations in the list of candidate sets of transformations is thus decremented.

For example, the sets of transformations can successively be tested, by increasing order of number of constraints, until a solution is found.

Thus new sets of transforms can be tested until a solution is found, starting from those who exhibit the highest likelihood of leading to a suitable solution.

It is now referred to figure 4.

Figure 4 represents a first example of stream transformation according to an embodiment.

By convention, in figures 4, 5 and 6, transformations will be represented according to a horizontal line of time, the streams before the transformation will be represented on top of the horizontal line, while the streams after the transformation will be represented on the bottom of the horizontal line.

The transformation T4, called "period division", comprises a division of a period of a stream into a plurality of smaller periods, associated to a separation of the packets to send among the plurality of the smaller periods.

For example, in figure 4, the initial stream sends a number of packets Pkt41, Pkt42, Pkt43, Pkt 44, Pkt45, Pkt46, Pkt47 ... Pkt4n during a period Per41. The transformation T4 transforms the stream into a transformed stream of lower period Per42. In the example of figure 4, the transformed stream sends a single packet PktPer42. However, this example is not limitative, and the transformed stream may also send a plurality of packets.

The cumulated size of the packets sent during the period Per42 by the transformed stream is equal to or higher than the cumulated size of the packets sent by the initial stream during the period Per41, multiplied by the radio of the second period Per42 divided by the first period Per41.

For example, the second period Per42 may be obtained by dividing the first period Per41 by an integer n. Thus, the cumulated size of the packets sent during the period Per42 (in the example of the figure 4, the size of the packet 42 is equal to or higher than the cumulated size of the packets sent during the period Per41 (in the example of figure 4, the sum of the size of the packets Pkt41, Pkt42 ... Pkt4n) divided by n. Thus, the flow rate of the transformed stream is at least equal to the flow rate of the initial stream.

Meanwhile, the period to consider for verifying the constraints after the transformation is the period Per42 instead of the period Per41. Therefore, a smaller number of packets needs to be considered. Furthermore, the hyperperiod of the set of transformed streams may be reduced, which greatly reduces the number of constraints to comply with.

The division may be selected in different manners.

For example, the division may be selected so as to divide the period of a stream into a smaller period that is equal to or a multiple of the greatest common divider of the periods of the set of streams, and not increase to the hyperperiod of the set of streams.

Thus, this ensures that none of the period division increases the hyperperiod of the streams. Indeed, as explained above, the hyperperiod of the streams is a critical factor for the complexity of the scheduling problem, because the highest the hyperperiod, the highest the number of combinations of overlapping periods to verify. The reduction of the hyperperiod is therefore a generally desirable objective of the transformations.

As a whole, the set of transformations may comprise at least one change of a period of a stream to reduce the hyperperiod of the set of streams.

Such a transformation may be identified by performing a prime factor decomposition of the periods of each stream, and the hyperperiod, and comparing the prime dividers of the period of each streams, and the dividers of the hyperperiod. For example, if the period of a single stream, expressed in elementary time unit, has "7" as a prime divider, a period division of this stream by dividing its period by 7 can be performed, in order to divide the hyperperiod of the set of streams by 7.

This example can be of course generalized to:

- the application of a same division of the period to a group of streams that have the same prime divider, for example a division by 7 of the period of all the streams that have "7" as prime divider, a division by 5 of the period of all the streams that have "5" as prime divider, etc.

- the application of a division by a power of a prime divider. For example, if a single stream has a period which is a multiple of 49 ($7^2$), and no other stream has a period which is a multiple of 7, the period of this stream can be divided by 49, in order to divide the hyperperiod of the set of streams by 49 ;

- a combination of a division of by a power of a prime divider, to a group of all the streams whose period is a multiple of the power of a prime divider.

As the reduction of the hyperperiod greatly reduces the complexity of the problem, it can be seen that such a period division may greatly reduce the complexity of the scheduling problem.

In some cases, a transformation may consist in a period change which is not a division. More specifically, a transformation may be a period change to reduce the hyperperiod of the set of streams.

For example, if the period of a stream, expressed in elementary time unit, is 97, which is a prime number, and the stream is the only stream having this period, this stream alone multiplies the hyperperiod of the set of streams by 97. Meanwhile, a minor modification of the period of the stream to be 96 instead of 97 drastically modifies the situation. Indeed, 96 is equal to $2^5 * 3$, and can thus be divided by 2, 3, 4, 6, 8, 12, 16, 24, 32, 48, 96. Many other streams will likely be divisible by one or more of these numbers. Therefore, a minimal change of the period of the stream can lead to a drastic diminution of the hyperperiod of the set of streams, and therefore of the complexity of scheduling problem.

Such transformation can be automatically proposed when the period of a stream is or is divisible by a large prime number. In this case, the replacement of the large prime number by a close non-prime number can be proposed.

For example, then transformation may consist in making a period of a stream that has the lowest greatest common divider with periods of other streams of the set of streams equal to the period of at least one other stream of the set of streams.

Thus, the hyperperiod is divided by a number as large as possible. Such a change can iteratively be proposed for a plurality of streams, in order to obtain the highest possible diminution of the hyperperiod.

It shall however be noted that, contrarily to the division case discussed above, a change of a period that does not consist in a division may modify the functionality of the stream, because the packets will not be transmitted in the same period. Such a change may be validated by a user, for example an expert user of a designer of the network.

To this effect:

- the proposal of change of the period can be displayed to the user, for example through a screen ;

- an input relative to an acceptance or a refusal of the change may be received, for example through user interfaces such as a mouse and a keyboard ;

- the change of period can be added to the transformations only if the input is relative to the acceptance of the change.

This therefore allows large reductions of the hyperperiod of the set of streams that would not be possible using period divisions only, while ensuring that the functionality of the network is preserved.

The validation of the changes can be iteratively proposed for a plurality of period changes.

The validation of period change can also be proposed only if the period change belongs to a set of transformation that implies a large reduction of the number of constraints.

It is now referred to figure 5.

Figure 5 represents a transformation T5 comprising at least one split of at least one packet of a stream into a plurality of smaller packets.

In the example of figure 5, the initial stream sends a single, large initial packet Pkt51 into a three subsequent packets Pkt52, Pkt53, pkt54 whose size is a third of the size of the packet Pkt51. More generally, a packet split may consist in splitting an initial packet into a number n of subsequent packets (with $n \geq 2$) whose cumulated size is equal to or higher than the size of the initial packet. For example, each of the subsequent packet may have a size equal to or higher than the size of the initial packet divided by n. The subsequent packets may have the same or different sizes.

Therefore, the total size of the data carried by the subsequent packets is at least equal to the size of the data carried by the initial packet, but splitting a packet into smaller packets provides more flexibility for routing the packets, and in particular allows interleaving the smaller packets with packets form other streams. This is especially relevant for large packets, that may be difficult to interleave. Thus, a packet split provides more flexibility for identifying a suitable solution for solving the scheduling problem.

In a number of embodiments of the invention, the split of the packet is further associated with a division of the period of said stream.

For example, if a single packet is to be sent in the initial stream, the size of the packet and period of the stream can be both divided by the same integer number.

For example, in the example of figure 5, the size of the packet and the period of the stream are both divided by 3: instead of sending a large packet Pkt51 during the period Per51, the transformed stream sends a smaller packet Pkt52, whose size is a third of the packet Pkt51, during a period Per52 which is a third of the period Per51. The packets Pkt53 and Pkt54 represented in figure 5 actually represent the packet Pkt52 to send in the subsequent repetitions of the period Per52.

Therefore, this allows benefiting from the packet split while reducing the hyperperiod of the set of streams.

It is now referred to figure 6.

The figure 6 represents an example of a transformation T6 which consists in grouping a plurality of packets of a stream into a single packet. In the example of figure 6, the packets Pkt61, Pkt62, Pkt63, Pkt64, Pkt65, Pkt66, Pkt67 ... Pkt6n are grouped into the packet PktGrp6. Therefore, the size of the packet PktGrp6 is equal to the cumulated size of the packets Pkt61, Pkt62, Pkt63, Pkt64, Pkt65, Pkt66, Pkt67 ... Pkt6n.

According to various embodiments of the invention, all or a subset of the packets of a stream can be grouped in a single packet.

The transformation T6 reduces the number of packets, and therefore the number of constraints to take into account. This is especially relevant for grouping small packets, so that the number of constraints is reduced but the single packet is not too big and does not cause interleaving issues.

The examples provided in figures 4, 5 and 6 demonstrate how transformation of streams allow reducing the number of constraints to take into account for solving the network scheduling problem.

They are however provided by means of example only of transformations that can be implemented according to the invention. Furthermore, all non-mutually exclusive transformations can be combined. For example, a grouping of packets can be associated with a period division or period change, a split of packet can be associated to a period division or period change, etc. Some transformations may also be applied to different packets of a same stream independently. For example, if a stream transmits a large packet followed by a plurality of very small packets, the large packet can be split into a plurality of medium packets, and the plurality of very small packets into a single medium packet. Thus, a large packet followed by a large number of very small packets is in this example transformed into few medium packets, thereby benefiting from the advantages of the two transformations.

It is also apparent that it is difficult to determine a priori the combination of transformations that leads to the highest reduction of the number of constraints, and thus of the complexity of the TSN scheduling problem. Thus, the estimation of the number of constraints of a plurality of sets of transformations at step S2, and the selection of the set of transformations to apply at step S3 accordingly allows selecting a set of transformations that actually highly reduces the number of constraints.

This disclosure is not limited to the method, device, and computer program described here, which are only examples. The invention encompasses every alternative that a person skilled in the art would envisage when reading this text.

**Claims**

1. A computer-implemented method (P2) comprising:

   - obtaining (S1):

       - a topology of a deterministic Ethernet network (Net); and
       - a set of critical streams to instantiate in the network, each critical stream being defined by at least a path, a period, a maximum allowed end-to-end latency, a set of packets, each packet being associated to a size ;

     - estimating (S2) a plurality of numbers of constraints implied respectively by a plurality of sets of stream transformations of said set of critical streams, each stream transformation modifying a stream while preserving or increasing a bitrate between a sender and one or more receiver nodes of the stream ;
     - selecting (S3) a set of stream transformations based on said plurality of numbers of constraints ;
     - applying (S4) said selected set of stream transformations to obtain a transformed set of critical streams ;
     - generating (S5), from said transformed set of critical streams, an Automated Theorem Proving "ATP" problem comprising formulas that express the constraints that must be complied with by the transmissions of the packets of the streams, and variables defining the configuration of the network ;
     - executing (S6) an ATP prover to solve the ATP problem and obtain values of said variables defining the configuration of the network that satisfies the set of formulas ;
     - if the execution of the ATP prover is successful (S7), configuring (S8) the network according to said obtained values defining the configuration of the network.

2. The computer-implemented method of claim 1, wherein said step of selecting the set of transformations comprises selecting the set of transformations that is associated with the lowest number of constraints among said plurality of numbers of constraints.

3. The computer-implemented of one of claims 1 or 2, comprising, if the execution of the ATP prover is not successful (S7), selecting (S9) another set of transformation belonging to said plurality of sets of stream transformations, and going back to said step (S4) of applying said selected set of transformations.

4. The computer-implemented method of any of the preceding claims, wherein said set of transformations comprises a plurality of transformations of a plurality of streams.

5. The computer-implemented method of the preceding claim, wherein said set of transformations comprises a plurality of instances of a same transformation applied respectively to a plurality of streams that share at least one common feature.

6. The computer-implemented method of the preceding claim, wherein said set of transformations comprises a plurality of instances of a same period change applied respectively to a plurality of streams having the same period.

7. The computer-implemented method of any of the preceding claims wherein said set of transformations comprises at least one division (T4) of a period of a stream into a plurality of smaller periods, associated to a separation of the packets to send among the plurality of the smaller periods.

8. The computer-implemented method of the preceding claim, wherein said division is selected so as to divide the period of a stream into a smaller period that is equal to or a multiple of the greatest common divider of the periods of the set of streams, and not increase to the hyperperiod of the set of streams.

9. The computer-implemented method of any of the preceding claims wherein said set of transformations comprises at least one change of a period of a stream to reduce the hyperperiod of the set of streams.

10. The computer-implemented method of the preceding claim, comprising:

    - displaying a proposal of a change of a period of a stream ;
    - receiving an input relative to an acceptance or a refusal of the change ;
    - adding said change to said et of transformations if the input is relative to the acceptance of the change.

11. The computer-implemented method of one of claims 10 or 11, wherein said change consists in making a period of a stream that has the lowest greatest common divider with periods of other streams of the set of streams equal to the period of at least one other stream of the set of streams.

12. The computer-implemented method of any of the preceding claims, wherein said set of transformations comprises at least one split (T5) of at least one packet of a stream into a plurality of smaller packets.

13. The computer-implemented method of the preceding claim, wherein said split of is further associated with a division of the period of said stream.

14. The computer-implemented method of any of the preceding claims, wherein said set of transformations comprises at least one grouping (T6) of a plurality of packets of a stream into a single packet.

15. Computer software comprising instructions to implement at least a part of a method according to one of claims 1 to 14 when the software is executed by a processor.

**FIG. 1**

Net1

S1 —— Obt top, strms

↓

S2 —— Est Nb Contr

↓

S3 —— Select set transf

↓

S4 —— Apply Trans

↓

S5 —— Gen form

↓

S6 —— Exec Solv

↓

S7 —— Succ?

Yes ↓

S8 —— Config Net

P2

# FIG. 2

**FIG. 3**

Per41

Pkt41 Pkt42  Pkt43 Pkt44  Pkt45  Pkt46  Pkt47 Pkt4n

time

T4

Per42      PktPer2

## Fig. 4

Per51

Pkt51

time

T5

Pkt52          Pkt53          Pkt54

Per52

## Fig. 5

Pkt61  Pkt62  Pkt63  Pkt64  Pkt65  Pkt66  Pkt67 Pkt6n

time

T6

PktGrp6

## Fig. 6

Europäisches
Patentamt

European
Patent Office

Office européen
des brevets

**EUROPEAN SEARCH REPORT**

Application Number

EP 23 30 5434

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FARZANEH MORTEZA HASHEMI ET AL: "A graphical modeling tool supporting automated schedule synthesis for time-sensitive networking", 2017 22ND IEEE INTERNATIONAL CONFERENCE ON EMERGING TECHNOLOGIES AND FACTORY AUTOMATION (ETFA), IEEE, 12 September 2017 (2017-09-12), pages 1-8, XP033292933, DOI: 10.1109/ETFA.2017.8247599 [retrieved on 2018-01-04] | 1-4,9, 10,12-15 | INV. H04L45/302 G06N5/01 H04L41/12 H04L45/00 H04L45/42 H04L47/28 H04L47/56 |
| Y | * abstract; figures 1-5; tables 1-4 * <br> * the whole document * <br> ----- | 5-8,11 | |
| X | Farzaneh Morteza Hashemi: "A Modeling Framework to Facilitate Schedule Synthesis of Time-Sensitive Networking", KATALOG DER DEUTSCHEN NATIONALBIBLIOTHEK, 29 March 2019 (2019-03-29), pages 1-165, XP093075368, Retrieved from the Internet: URL:https://d-nb.info/1193650380 [retrieved on 2023-08-22] | 1-4,9, 10,12-15 | |
| Y | * abstract * <br> * Section 3 Approach Overview;; page 37 - page 45 * <br> * Section 4 Model-based Schedule Synthesis; Section 5 Model Correction and Optimisation; page 51 - page 92 * <br> ----- <br> -/-- | 5-8,11 | TECHNICAL FIELDS SEARCHED (IPC) <br><br> H04L <br> G06N |

The present search report has been drawn up for all claims

| Place of search | Date of completion of the search | Examiner |
|---|---|---|
| The Hague | 24 August 2023 | Cranley, Nikki |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | REUSCH NIKLAS ET AL: "Window-Based Schedule Synthesis for Industrial IEEE 802.1Qbv TSN Networks", 2020 16TH IEEE INTERNATIONAL CONFERENCE ON FACTORY COMMUNICATION SYSTEMS (WFCS), IEEE, 27 April 2020 (2020-04-27), pages 1-4, XP033779941, DOI: 10.1109/WFCS47810.2020.9114414 [retrieved on 2020-06-10] * abstract * * Section II System Model; page 1 - page 2 * * Section IV Optimisation Strategy; page 3 * ----- | 5-8,11 | |
| A | HOUTAN BAHAR ET AL: "An Automated Configuration Framework for TSN Networks", 2021 22ND IEEE INTERNATIONAL CONFERENCE ON INDUSTRIAL TECHNOLOGY (ICIT), IEEE, vol. 1, 10 March 2021 (2021-03-10), pages 771-778, XP033925478, DOI: 10.1109/ICIT46573.2021.9453628 [retrieved on 2021-06-11] * abstract * * Section IV.B and Section IV; page 773 - page 776 * ----- | 1-15 | TECHNICAL FIELDS SEARCHED (IPC) |

-/--

The present search report has been drawn up for all claims

| Place of search | Date of completion of the search | Examiner |
|---|---|---|
| The Hague | 24 August 2023 | Cranley, Nikki |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
........................................................
& : member of the same patent family, corresponding
document

EPO FORM 1503 03.82 (P04C01)

page 2 of 3

EP 4 440 071 A1

| | Europäisches Patentamt European Patent Office Office européen des brevets | EUROPEAN SEARCH REPORT | Application Number EP 23 30 5434 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JIN XI ET AL: "Joint Algorithm of Message Fragmentation and No-Wait Scheduling for Time-Sensitive Networks", IEEE/CAA JOURNAL OF AUTOMATICA SINICA, CHINESE ASSOCIATION OF AUTOMATION (CAA), vol. 8, no. 2, 8 January 2021 (2021-01-08) , pages 478-490, XP011830004, ISSN: 2329-9266, DOI: 10.1109/JAS.2021.1003844 [retrieved on 2021-01-07] * abstract * * Section IV; page 481 - page 482 * * Section V.C; page 485 - page 486 * ----- | 1-15 | |

TECHNICAL FIELDS SEARCHED (IPC)

The present search report has been drawn up for all claims

| Place of search | Date of completion of the search | Examiner |
|---|---|---|
| The Hague | 24 August 2023 | Cranley, Nikki |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

**Non-patent literature cited in the description**

- **CRACIUNAS, S. S. ; OLIVER, R. S. ; AG, T.** An overview of scheduling mechanisms for time-sensitive networks. *Proceedings of the Real-time summer school LÉcole dÉté Temps Réel (ETR),* 2017, 1551-3203
- *Time-Sensitive Networking Task Group,* 06 July 2016, http://www.ieee802.org/1/pages/tsn.html

- *802.1Qbv-Enhancements for Scheduled Traffic,* 2016, http://www.ieee802.org/1/pages/802.1bv.html
- **CRACIUNAS, S.S. ; OLIVER, R.S.** *An Overview of Scheduling Mechanisms for Time-sensitive Networks,* 2017